# EUROPEAN PATENT SPECIFICATION

(11) **EP 0 880 148 B1**
(45) Date of publication and mention of the grant of the patent: **10.04.2002**
(21) Application number: 98300696.6
(22) Date of filing: 30.01.1998
(51) Int. Cl.: H01F 1/057

(54) **A co-precipitation-reduction-diffusion process for the preparation of neodymium-iron-boron permanent magnetic alloys**
Kopräzipitations-Reduktions-Diffusions-Verfahren zur Herstellung von Neodym-Eisen-Bor-Permanentmagnetlegierungen
Procédé de coprécipitation-réduction-diffusion pour la préparation d'alliages de néodymium-fer-bore magnétiques permanents

(30) Priority: 22.05.1997 CN 97104333
(43) Date of publication of application: 25.11.1998
(73) Proprietor: NANKAI UNIVERSITY, Tianjin City (CN); Tianjin Kenda Industry & Trade Group Company, Tianjin City (CN)
(72) Inventor: Zhou, Yongqia, Tianjin City, 300071 (CN); Hu, Xuying, Tianjin City, 300071 (CN); Shen, Panwen, Tianjin City, 300071 (CN); Zhang, Shoumin, Tianjin City, 300071 (CN)
(74) Representative: Woods, Geoffrey Corlett

(56) References cited:
- EP-A- 0 386 747
- PATENT ABSTRACTS OF JAPAN vol. 097, no. 009, 30 September 1997 & JP 09 129423 A (KAWASAKI TEITOKU KK;SANEI KASEI KK; YONEYA:KK), 16 May 1997

## Description

The present invention relates to the preparation of a neodymium-iron-boron (referred to as Nd-Fe-B in this description) permanent magnetic alloys and more particularly to a process of preparing Nd-Fe-B Permanent magnetic alloys by using a wet-process steps of a co-precipitaion and intermediate products and Nd-Fe-B permanent magnetic alloys prepared by the process.

The prior art preparation technology covers three categories, known as the rapid quenching process (Croat et al, Appl Phys Lett 44(1) (1984) 148), the powder metallurgical process (Sagawa et al, J Appl Phys 55(6) (1984) 2083) and various modification techniques thereof, and the calcium reduction-diffusion process ("Proc 8^{th} Int Workshop on RE Magnets and Their Application", 407 (1985)). All of these are dry processes in metallurgy. A common problem with dry processes is the requirement of staiting materials of very high purity. Moreover, any wastes, whenever occur, or machining surplus produced during cutting the sinters into magnetic elements, normally making up 30-50%, even more of the sinters weight, may not be used directly, at most may be used for recovering rare earths therefrom. Therefore, the cost for this kind of processes can hardly be further reduced.

EP 0 386 747 discloses a wet process for producing a rare earth ferromagnetic alloy. In this process a compound such as sodium or potassium borohydride is used as the reducing agent and born source.

The present invention provides a process incorporating wet-process steps into the preparation of Nd-Fe-B permanent magnetic alloys. This process can significantly reduce the cost compared to any of the prior art processes, because soluble rare earth salts are used as the starting materials so as to avoid the use of expensive rare earth metals, because purity of the starting materials is allowed to be as low as 98%, even less, because the machining surplus or wastes in Nd-Fe-B processing may be used directly as parts of the starting materials, and because the Nd-Fe-B alloys thus obtained are already in the form of powders of 10 - 50 microns in diameter so as to great!y save the energy consumption in powder manufacturing.

Thus, a object of the present invention is to provide a process for the preparation of Nd-Fe-B permanent magnetic alloys (the so-called third generation of rare earth permanent magnetic alloys) by co-precipitation-reduction-diffusion method. In the present invention, the alloy elements are allowed to enter from aqueous solution to co-precipitate in a given proportion, the co-precipitate is then converted to hydrogen pre-reduction products containing only alloy elements and oxygen, and finally the Nd-Fe-B magnetic alloys are obtained by the calcium reduction-diffusion method, composed mainly of 28,0-50,0 wt% of neodymium and 0.6-2.8 wt% of boron with the remainder being principally iron. An another object of the present invention is to provide the intermediate product (coprecipitate products and hydrogen pre-reduction products ) and Nd-Fe-B permanent magnetic alloys prepared by the process.

In comparison with existing technology, the main features of the invention lie in that the following problems were solved introducing non-metallic element boron into the co-precipitate and alloy, dispelling the effect from solid-phase side-reaction in hydrogen pre-reduction, and avoiding neodymium ran-off and alloy-oxidation during the rinsing procedure while ensuring the rinsing cleanliness.

The present invention main comprises a process for the preparation of Nd-Fe-B permanent magnetic alloys comprising the steps of
(a) mixing an aqueous solution of a neodymium salt, optionally containing a light rare earth or heavy rare earth metal. with an aqueous solution of a ferrous salt, optionally containing another transition metal, to yield a feed solution, which is then subjected a co-precipitation with a precipitant of an aqueous solution of ammonium hydroxide and ammonium carbonate containing a soluble boron compound chosen from boric acid, borax and boron oxide, and optionally a soluble aluminum salt, to form a co-precipitate product,
(b) introducing hydrogen at a temperature of 600-1000°C into the co-precipitate product to remove part of oxygen therefrom, with the hydrogen pre-reduction continuing until there is no moisture evolving in any tail gas and only oxygen is left over in the product apart from the alloy elements, so as to form a hydrogen pre-reduction product.
(c) completely mixing the hydrogen pre-reduction product with at least one of metallic calcium and calcium hydride, to cause a calcium reduction-diffusion and
(d) rinsing, drying the reduction product and manufacturing the alloy powders.

Nd-Fe-B alloys are prepared by mixing a neodymium salt and a ferrous salt to yield a Feed solution, using the feed solution to conduct co-precipitation along with an aqueous solution of ammonium hydroxide (concentrated ammonia water) and ammonium carbonate containing a soluble boron compound, after complete reaction, setting the solution aside, followed by filtering, water washing and drying, grinding the co-precipitation product, and heating it in a rotary drying furnace under nitrogen to eliminate ammonia then introducing hydrogen to remove part of oxygen so as to leave oxygen alone in the product apart from alloy elements, subsequently cooling the product and rinsing it with water in a conical rinser, after drying placing the pre-reduction product in a sealed reaction can under an inert or reducing atmosphere or under vacuum to perform further reduction by metallic calcium of calcium hydride at a high temperature, then soaking the reduction product with water milling and rinsing it with water and chemicals in a conical rinser under an inert gas, then soaking it with volatile organic solvents, and finally drying at 120°C under vacuum and milling it.

By adjusting the composition of co-precipitate in the present process, namely that light rare earths such as lanthanum, cerium, praseodymium etc , or heavy rare earths such as terbium, dysprosium, holmium etc may be used to replace part of neodymium, aluminum to replace part of boron, and transition metals such as cobalt, nickel, copper. niobium etc to replace part of iron, we can obtain permanent magnetic alloys with improved or modified magnetism. In the co-precipitation step, water soluble neodymium salts such as neodymium chloride, neodymium nitrate, neodymium sulfate etc and salts of other rare earths, neodymium oxide and other rare earth oxides soluble in hydrochloric acid, water-soluble ferrous salts such as ferrous chloride, ferrous sulfate etc and water-soluble salts of other transition metals, soluble boron compounds such as boric acid, borax, boron oxide etc, and soluble aluminum salts may be used as the raw materials to provide alloy elements such as neodymium, iron and boron, as well as partial substitution elements thereof.

In the process of this invention, the composition of alloy elements in the co-precipitate is predetermined, thereby the weight ratio of alloy element compounds to be used, based on alloy elements, is neodymium (per se or further including partial other rare earths) iron (per se or further including partial other transition metals) boron (per se or further including partial aluminum) = 1:1- 0-2, 5: 10-100; the amount of precipitant is 1.5-5 times of that required stoichiometrically, and the molar ratio of ammonium hydroxide to ammonium carbonate in precipitant is 1:1,5-7, more preferably 1:3-5, the amount of calcium (or calcium hydride) used is 1,4 - 4,0 times of the stoichiometric amount (moles) required to reduce hydrogen pre-reduction product and to convert oxygen therein to calcium oxide.

Various steps stated previously will now be described in more detail.

### I. Co-precipitation

By co-precipitation it is meant that alloy elements are transferred from aqueous solution into precipitate in accordance with the predefined composition, and co-precipitate also refers to the precipitate obtained by this operation. The co-precipitation-reduction-diffusion (CPRD) method requires that the co-precipitate composition, in particular the alloy element composition therein, can be adjusted and controlled within a reasonable range, and after decomposition, normally after hydrogen pre-reduction, there exists oxygen in the resulting product as the only non-alloy element apart from alloy elements. In that case, there are actually only three kinds of compounds available as the precipitants, that is, hydroxyl, carbonate and oxalate radicals. All these three precipitants will form sparingly soluble compounds having very small solubility product with both neodymium and iron, in contrast, borates probably formed with these precipitants should be considered as soluble. Accordingly, it is difficult to introduce boron into the co-precipitate. In this invention, a mixture of ammonium hydroxide (concentrated ammonia water) and ammonium carbonate mixed in a proper proportion are chosen as the precipitant in order that in the presence of ammonium salts, neodymium, iron and boron can be introduced into the co-precipitate according to the composition requirement of Nd-Fe-B permanent magnetic alloys, wherein the molar ratio of ammonium hydroxide (concentrated ammonia water) to ammonium carbonate in the precipitant may vary from 1:7 to 10:1, typically the molar ratio of ammonium carbonate to ammonium hydroxide (concentrated ammonia water) is 1.5:1 - 7:1, preferably 3:1 - 5:1. The pH value after the feed solution has mixed with the precipitant is preferably controlled within the range of 7 - 10, more preferably 7 - 8. Since solubility of the salts formed by boric acid with neodymium or iron is not very high, it is preferred to add boric acid or soluble borates to be used as raw material into the precipitant beforehand, while iron, neodymium and other metals to be added into the alloys are used in the form of soluble salts to give a feed solution, and both solutions are mixed together in an appropriate way to perform the co-precipitation. The amount of precipitant should be in excess, preferably 1,5-5 times in excess of the stoichiometric quantity. By performing the co-precipitation in the above manner, the recovery rate of neodymium and other rare earths is a maximum (not less than 95%). In preparation of the feed solution containing metal ions of the alloy elements, iron and such metal ions that can not form complexes with ammonia should be 2 - 10% in excess, while metal ions that can form complexes with ammonia should be 10-40% in excess, and certain ions such as copper about 1 time in excess, and boron 10-100 times in excess. There are small amount of metal ions and large amount of borate radicals in the mother liquor after filtering the co-precipitate. Two schemes may be used for recovery. One scheme is by properly acidifying the resulting solution first (decomposing large quantity of carbonate radicals), and then passing it through a column of cation ion exchange resin for recovery of the metal ions thereof. In this case, metal ions are recovered for reuse by elution with hydrochloric acid, while effluents may be directly used for preparing the precipitant solution after being properly concentrated and replenishing a required amount of boron. Another scheme is by properly acidifying and recovering metal ions, then adjusting pH to weakly alkaline (about pH 8) and passing the solution through an anion ion exchange column with chloride ions on, from which boric radicals are eluted by a weakly acidic solution (pH 4-6). The total availability of neodymium, iron and various metal ions is higher than 95%, and that of boron is not less than 90%.

One of the advantages of the process described in the present invention is that any wastes, whenever occur, or machining surplus produced in the course of cutting Nd-Fe-B sinters into magnetic elements or finishing the magnetic elements obtained, may all be dissolved with hydrochloric acid and thus used directly as the feed solution. In this case small amount of boron present in the feed solution does not affect the co-precipitation at all, but the remaining large amount of boron needed to be made up should still be added into the precipitant. If desired, a required amount of metal salts may be added into the feed solution. In the co-precipitation of the present invention, there may be three addition fashions sequentially adding i.e, adding the precipitant into the feed solution, anti-sequentially adding i.e, adding the feed solution into the precipitant, and adding both solutions simultaneously into the reactor at certain feed rates. The anti-sequentially-adding and simultaneously-adding fashions are preferred, especially by the anti-sequentially-adding fashion the reaction would be more smooth and uniform. The feed-rate should not be too fast. An appropriate feed-rate should allow ferrous ions to be in a prescribed pH environment in time for entering the precipitate, but not in an environment with pH value having decreased to form ferro-ammonium ions. It deserves a special caution in particular when adding metal elements which can form complexes with ammonia. Proper heating is needed for the reaction with the preferred temperature being 40-80°C, more preferably 50-60°C. After reaction the co-precipitate should undergo aging for 12-48 hours, more preferably 12-24 hours. The co-precipitate is then filtered, water washed 3 - 6 times and dried for subsequent use.

### 2. Hydrogen pre-reduction

The hydrogen pre-reduction involves two consecutive steps. In the first step, the co-precipitate undergoes initial thermal decomposition in a nitrogen stream at a temperature of 600-1000°C, the completion criterion of which is the absence of ammonia in the tail gas. In the second step, iron (and other constituents reducible by hydrogen) in the co-precipitate is reduced to its simple substance in a hydrogen stream at a temperature of 600 - 1000 °C, and the co-precipitate is thus decomposed completely, the completion criterion of which is the fact that there is no any moisture in the tail gas. The small amount of light impurities resulting from the hydrogen pre-reduction should be removed by water rinsing. The co-precipitate should undergo grinding and sieving by the 80- 180-mesh screens, typically through 100- mesh screen prior to hydrogen pre-reduction, and after hydrogen pre-reduction but prior to water rinsing, as well as after rinsing. The product of hydrogen pre-reduction should be dried completely. The content of alloy elements is not less than 87 wt%.

### 3. Calcium reduction-diffusion

At least one species of metallic calcium (grains or scraps) and calcium hydride is used as the reducing agent in calcium reduction. Its amount is 1.4 - 4.0 times of the stoichiometric amount (by moles) required to reduce oxides contained in the product of hydrogen pre-reduction and form calcium oxide. It is necessary to mix the product of hydrogen pre-reduction with the reducing agent intimately. Reduction is carried out in a closed reaction can, in which the furnace materials are intimately packed, under an atmosphere of inert or reducing gases, or under vacuum (1 - 5 Pa), the reduction continues for 1 - 3 hours at a temperature of 1000 - 1250 °C. When the temperature arrives at a level for the reduction to take place, the temperature is preferably under program control, that is to keep at 800 - 900 °C for 1 - 2 hours. After completion of the reduction, temperature decrease is preferably also under program control, typically to keep the temperature at 900-1100 °C for 1 - 3 hours for alloying, and to decrease the temperature as rapidly as possible while it has been lower than 900 °C.

### 4. Rinsing

The rinsing procedure in the prior art using calcium reduction method for the preparation of Nd-Fe-B permanent magnetic alloys is characterized by its violent reaction, large losses of neodymium in solution and ease of oxidation of alloy fines, because acidic rinsing liquid (for example acetic acid) is usually used and the oxidized film resulting from oxidation of alloy fines in the rinsing procedure is hardly removed. In the present invention, the resulting product is rinsed by water and then by chemicals, that is rinsed by using a basic EDTA or acetylacetone aqueous solution, after it has been soaked in water to swell up and the alloy grains have subsequently been ground to 10-50-µm-diameter, so the oxidized film freshly formed at the surface of alloy particles or the residual neodymium oxide which has not been reduced can be cleaned and removed. Chemical rinsing takes place in a basic condition, with pH value of the rinsing liquid being adjusted to 8 - 10 by sodium hydroxide, the EDTA concentration in rinsing liquid being 0.5-3 wt% or acetylacetone concentration at 0.5- 1 vol%. Finally the product is washed with water. The effect of water-washing and that after chemical rinsing is determined by monitoring the pH value of the waste liquor. When the pH value of the waste liquor reaches and stays at 8 for at least 10 minutes, the rinsing step is over. During water washing and chemical rinsing alloy particles tend to aggregate together due to their magnetism, therefore fully agitating is necessary. All rinsing steps are performed under an atmosphere of inert or reducing gases in a conical vessel, the cross-section of which is tapered downwards, so the velocity of water stream decreases gradually as flowing upwards. As long as the flow rate is properly controlled, the overflow effluent will not entrain particles of alloy or alloy components which are not sufficiently alloyed, while all soluble or insoluble impurities which need be rinsed off, are entrained out. After thoroughly rinsing alloy fines are collected in the conical vessel for subsequent treatment. After squeezing the water out of the rinsed alloy powder, alloy powder is soaked with ethanol, acetone and ether successively, at least using one solvent from ethanol and acetone to displace the residual water from the crevices in alloy particles by volatile organic solvents in order not to leave any liquids within the crevices after drying. During displacement with organic solvents the material is preferably protected by a reducing or inert atmosphere. After the displacement with organic solvents the alloy, powders are dried under vacuum condition at a temperature not higher than 120 °C.

Purity of the alloy powders resulting from the previous rinsing steps may be as high as 99,0- 100 % in terms of the content of alloy elements, with the content of calcium being less than 0.01 - 0.05 %. The waste liquor from rinsing steps is then treated for recovery of neodymium and other rare earths.

### 5. Drying and powder manufacturing

After drying at 120 °C, Nd-Fe-B alloy powder obtained by the previous steps may be directly milled to a mean diameter of 3 µm, for example, by a jet mill or a wet mill process to further grind them.

The benefits of the present invention are evident. The present invention provides a method to directly introduce non-metallic element boron into the alloys and overcome the problem caused by solid-phase side-reactions during hydrogen pre-reduction, and to avoid neodymium run-off and alloy oxidation during the rinsing step, so as to ensure the rinsing cleanliness and greatly enhance the purity of the resulting Nd-Fe-B alloy. Because soluble rare earth salt is used as the starting material to eliminate the need of expensive rare earth metals; because the purity of the feed stock can be as low as 98 %, or even less to allow to use machining surplus or wastes as parts of feed-stocks, and because Nd-Fe-B alloy powders are directly obtained to greatly save energy consumption for alloy grinding, the present invention can significantly decrease the cost in comparison with any of the existing processes.

The invention will be illustrated further in the Examples which follow:

### Example 1

80 g of NdCl₃ · 6H₂O were weighed and dissolved in 5 L of water, into which 4 ml of 1:1 hydrochloric acid were added, the solution was then gently warmed to yield a pale purple clear solution, and then 700 g of FeCl₂ · 4H₂O were weighed and added into the above solution and dissolved, thus the feed solution was prepared 550 g of boric acid were weighed and dissolved in 5 L of water, into which 150 ml of concentrated ammonia water were added and then 1000 g of ammonium carbonate added and dissolved, thus a clear solution was formed as a precipitant. The precipitant solution was transferred into a 20 L reactor, heated to 50-60 °C, the feed solution was then slowly introduced under constant stirring ( agitation speed 1500-2000 rpm) within about 30 minutes, with the pH being 7.6 after addition. The solution was allowed to stand overnight for aging, then filtered, water washed 5 times, and after drying 439 g of co-precipitate were obtained. The composition of alloy elements in the co-precipitate was Nd_{18.2}Fe_{73.4}B_{8.4}, and the content of alloy elements was 65 20%. The recovery rates of neodymium, iron and boron were 98,7%, 87,7% and 4%, respectively.

### Example 2

The co-precipitate obtained from Example 1 was dried ground and sieved trough 100-mesh screen, then heated to 800 °C in a rotary drying furnace, and nitrogen was admitted at a flow rate of about 1 l/min. After about 1.5 hr no ammonia had been detected in the tail gas, hydrogen was then switched to enter with a flow rate of 2 l/min first, and 1 hr later it was decreased to 1 l/min. After about 2 hr in total had elapsed no moisture could be detected in the tail gas. The product was cooled and withdrawn from the furnace, crushed to sieve through 180-mesh screen, and then rinsed by an upwardly flowing water stream in a conical rinser. The flow velocity was adjusted so that there existed no black powders in the overflow liquor. Rinsing finished up within about 5 min, indicated by a sign that there was no white waxy solids in the overflow liquor. The hydrogen pre-reduction product thus rinsed was dried again in the rotary drying furnace at 120 °C under vacuum of about 5 Pa. After about 2 hr drying, the product was cooled and removed in the form of black powders, weighed about 329 g, the alloy element content of which was 88.5%. The product was pulverized, sieved by 180-mesh screen, and then mixed with 160 g of calcium scraps (about 50% in excess). The mixture was packed tightly in an iron reaction can, which was then sealed and placed in the constant temperature zone of a tubular furnace. Then the reaction mixture was subjected to a reduction-diffusion under the protection of a still argon atmosphere and by a heating sequence programmed as at 850 °C for 2 hr, at 1200 °C for 3 hr and then at 1100 °C for 2 hr. After complete reaction, the reaction can was cooled rapidly to room temperature, then opened, and the product was soaked in water. When hydrogen stopped escaping, the material which had been soaked to swell up were all transferred into a ball mill for ball milling for 30 min. The powder was then transferred into a conical vessel for rinsing with water for about 10 mm until pH of the overflow water stabilized basically at 8. The alloy powders accumulated at the bottom of the conical vessel. The vessel was refilled with an acetylacetone aqueous solution (0.5 vol%) of pH 10, whereby the chemical rinsing was effected for 30 min under nitrogen with vigorous agitation. After that the chemical rinsing, liquor was drained off and powders were again washed with water until the pH of overflow water stabilized at 8 again Water was drained from the conical vessel and a desired amount of ethane was fed to soak the alloy powders for 30 min. Ethanol was drained and acetone was fed to soak for additional 30 min. And then acetone was drained and ether was fed to soak for 10 min. After ether had been drained, the alloy powders were removed and dried for 1 hr under vacuum at 120 °C. The alloy composition was Nd_{17.9}Fe_{74.0}B_{8.1}, the purity 99.54% and calcium content 0 03%. The alloy was milled until an average diameter of about 3 µm was reached. The alloy powders were then compacted and shaped up under a pressure of 2 tons per square centimeter in a magnetic field of 10 kOe and sintered at 1000 °C under argon for 1 hr, then annealed (aged) at 600 C for 1 hr. The cooled alloy was measured as maximum energy product (BH)ₘₐₓ=256.9 kJ/m³, remanence Br=0.001151T (11.51 kG), coercive force iHc-802.0 kA/m.

### Example 3

220 g NdCl₃ · 6H₂O and 28 g of DyCl₃ · 6H₂O were weighed and dissolved in 5 L of water, into which 4 ml of 1:1 hydrochloric acid was added, the solution was then gently warmed to give a pale purple clean solution. Then 700 g of FeCl₂ · 4H₂O were weighed, added into the above solution and dissolved, thus a feed solution was prepared 550 g of boric acid were weighed and dissolved in 5 L of water, into which 150 ml of concentrated ammonia water and 1000 g of ammonium carbonate were added and dissolved to form a cleat solution as the precipitant. The precipitant solution was transferred into a 20 L reactor and heated to 50 - 60 °C, into which the feed solution was slowly fed within in 30 min with constant stilling (1500-2000 rpm). The precipitate was formed and gradually turned to dark green colour with pH of the mother liquor being 7.8. The solution was allowed to stand overnight for aging then filtered, washed with water 5 times and dried to obtaine 428 g of co-precipitate. The composition of alloy elements in the co-precipitate was Nd_{14.2}Dy_{1.6}Fe_{75.7}B_{8.5} and the alloy element content was 64.80%. The recovery rates of neodymium, dysprosium, iron and boron were 96.9%, 89.7%, 90.3% and 3.9%, respectively,

### Example 4

The co-precipitate obtained from Example 3 was dried ground, sieved through 100-mesh screen, and then subjected to a hydrogen pre-reduction in a similar method as described in Example 2. The product of pre-reduction was ground, rinsed with water and dried to obtain 320 g of black powder with an alloy element content being 87.6%. The powder was then ground and sieved through 180-mesh screen, then mixed with 160 g of calcium scraps (about 60% in excess). The mixture was tightly packed in an rion reaction can, which was then sealed and placed in the constant temperature zone of a tubular furnace. The reduction-diffusion was then effected by the same steps as in Example 2. The product was cooled and withdrawn from the reaction can, and then rinsed and dried by the same method as in Example 2. The alloy composition was Nd_{14.0}Dy_{1.6}Fe_{76.5}B_{7.9}, purity 99.61% and calcium content 0.04%. The resulting alloy was milled until an average diameter of about 3 µm was reached and then oriented compacted, sintered and aged under the same conditions as in Example 2. The cooled product was measured as maximum energy product (BH)ₘₐₓ=250,4 kJ/m³, remanence Br=0.0011T (11.00 kG), and coercive force iHc=1402.4 kA/m.

### Example 5

250 g of NdCl₃ · 6H₂O, 550 g of FeCl₂ · 4H₂O 100 g of CoCl₃ · 6H₂O and 20 g of AlCl₃ were weighed and dissolved in 5 L of water together, then 4 ml of 1:1 hydrochloric acid were added and the content was gently warmed for dissolution to give a red clear solution (feed solution) 310 g of boron oxide were weighed and dissolved in 5 L of water, then 150 ml of concentrated ammonia water and 1000 g of ammonium carbonate were added and dissolved to yield a clear solution (precipitant). The precipitant solution was transferred into a 20 L reactor and heated to 50-60°C. Then the feed solution was gradually fed within about 30 min with constant stirring (1500-2000 rpm), the pH of mother liquor being 8.0. The mixture was set aside overnight for aging, and then filtered, washed with water 5 times and dried to obtain 424 g of co-precipitate. The composition of alloy elements in the coprecipitate was Nd_{15.4}Fe_{58.3}Co_{16.2}B_{8.2}Al_{1.9} and the content of alloy elements was 65.10%. The recovery rates of neodymium, iron, cobalt, boron and aluminum were 93%, 89.0%, 80.6%, 3.8% and 53.4%, respectively. After that the product was subjected to a hydrogen pre-reduction and dried by the same method as in Example 2 318 g of black powder were thus obtained with alloy element content being 87.8%. The product was ground, sieved through 180-mesh screen, and then mixed with 100 g of calcium scraps and 80 g of calcium hydride. The mixture was then intimately packed in an iron reaction can, which was then sealed and placed in the constant temperature zone of a tubular furnace to allow the content to undergo a reduction-diffusion by the same steps as in Example 2. The cooled product was withdrawn from the reaction can, and then rinsed and dried by the same method as in Example 2. The alloy composition was Nd _{15.2}Fe_{59.3}Co_{16.4}B_{7.5}Al_{1.6}, purity 99.48% and calcium content 0.02%. The resulting alloy was milled until an average diameter of about 3 µm was reached, and then oriented, compacted, sintered and aged under the same conditions as in Example 2. The cooled product was measured as maximum energy product (BH)ₘₐₓ=328.3 kJ/m³. remanence Br=0.00134T (13.4 kG), and coercive force iHc=814.5 kA/m.

### Example 6

170 g of NdCl₃ · 6H₂O, 700 g of FeCl₂ · 4H₂O, 55 g of CeCl₃ · 6H₂O and 30 g of PrCl₃ · 6H₂O were weighed and dissolved in 5 L of water together, then 4 ml of 1 I hydrochloric acid was added and the content was slightly warmed for dissolution to give a pale red clear solution (feed solution) 310 g of boron oxide were weighed and dissolved in 5 L of water, then 150 ml of concentrated ammonia water and 1000 g of ammonium carbonate were dissolved in it to form a clear solution (precipitant). The precipitant solution was transferred into a 20 L reactor and heated to 50-60°C. Then the feed solution was gradually fed within about 30 min with constant agitation (1500-2000 rpm), the pH of mother liquor being 8.2. The mixture was set aside overnight for aging, and then filtered, washed with water 5 times and dried to obtain 426 g of co-precipitate. The composition of alloy elements in the co-precipitate was Nd_{10.9}Fe_{76.5}Ce_{3.2}B_{7.5}Pr_{1.9} and the content of alloy elements was 65.35%. The recovery rates of neodymium, praseodymium, cerium, iron, and boron were 96.6%, 93,50%, 90.1%, 91.1% and 3.5%, respectively. The product was hydrogen-pre-reduced and dried by the same method as in Example 2, 318 g of black powder were thus obtained with alloy element content being 87.5% The product was ground, sieved through 180-mesh screen, and then mixed with 180 g of calcium scraps (about 60% in excess). The mixture was then intimately packed in an iron reaction can, which was then sealed and placed in the constant temperature zone of a tubular furnace to allow the content to undergo a reduction-diffusion by the same steps as in Example 2. The cooled product was withdrawn from the reaction can, and then rinsed and dried by the same method as in Example 2. The alloy composition was Nd_{10.6}Fe_{76.6}Ce_{3.3}B_{7.3}Pr_{2.2}, purity 99.61% and calcium content 0.03%. The resulting alloy was milled until an average diameter of about 3 µm was reached, and then oriented, compacted, sintered and aged under the same conditions as in Example 2. The cooled product was measured as maximum energy product (BH)ₘₐₓ=230.8 kJ/m³, remanence Br=0.00118T (11.80 kG), and coercive force iHc=577.2 kA/m.

### Example 7

200 g of NdCl₃ · 6H₂O, 50 g of DyCl₃ · 6H₂O. 680 g of FeCl₂ · 4H₂O and 15 g of AlCl₃ were weighed and dissolved in 5 L of water together. then 4 ml of 1 l hydrochloric acid were added and the content was slightly warmed for dissolution to give a pale red clear solution (feed solution I) 21.5 g of NbOCl₃ were weighed and dissolved in 100 ml of 1 l hydrochloric acid (feed solution (I) 300 g of boron oxide were weighed and dissolved in 5 L of water, then 150 ml of concentrated ammonia water and 1050 g of ammonium carbonate were dissolved in it to yield a clear solution (precipitant) The precipitant solution was transferred into a 20 L reactor and heated to 50-60 °C. Then the feed solutions I and II were fed in a simultaneously-adding fashion into the precipitant solution within about 30 min with constant stirring (1500 rpm) pH of the mother liquor being 8.0 at the end of addition. The mixture was set aside overnight for aging and then filtered, washed with water 5 times and dried to obtain 436.5 g of co-precipitate. The composition of alloy elements in the co-precipitate was Nd_{12.4}Dy_{3.0}Fe_{74.2}Nb_{2.3}B_{6.8}Al_{1.3} and the content of alloy elements was 66.12%. The recovery rates of neodymium, dysprosium, iron, niobium, boron and aluminum were 95.6%, 96.4%, 92.9%, 99.4%, 3.4% and 49.5%, respectively. The product was hydrogen-pre-reduced and dried by the same method as in Example 2.327 g of black powder were thus obtained with alloy element content being 88.2%. The product was ground, sieved through 180-mesh screen, and then mixed with 180 g of calcium scraps in a V-type mixer. The mixture was then intimately packed in an iron reaction can which was then sealed and placed in the constant temperature zone of a rubular furnace to allow the content to undergo a reduction-diffusion by the same steps as in Example 2. The cooled product was withdrawn from the reaction can, and then rinsed and dried by the same method as in Example 2. The alloy composition was Nd_{12.3}Dy_{3.0}Fe_{74.3}Nb_{2.6}B_{6.7}Al_{1.1}, purity 99.47% and calcium content 0.01%. The resulting alloy was milled until an average diameter of about 3 µm was reached, and then oriented, compacted, sintered and aged under the same conditions as in Example 2. The cooled product was measured as maximum energy product (BH)ₘₐₓ=240 kJ/m³, remanence Br=0.0011T (11.00 kG), and coercive force iHc=1354 kA/m.

### Example 8

200 g of NdCl₃ · 6H₂O, 55 g of DyCl₃ · 6H₂O, 680 g oF FeCl₂ · 4H₂O and 50 g of CuCl₂ · 4H₂O were weighed and dissolved in 5 L of water together, then 2 ml of 1 l hydrochloric acid were added and the content was slightly warmed for dissolution to give a pale red clear solution (feed solution) 350 g of boron oxide were weighed and dissolved in 5 L of water, then 100 ml of concentrated ammonia water and 1100 g of ammonium carbonate were dissolved in it to yield a clear solution (precipitant). The precipitant solution was transferred into a 20 L reactor and heated to 60 °C. Then the feed solution was gradually fed within about 30 min with constant stirring (2000 rpm), the pH of mother liquor being 7.6. The mixture was allowed to stand overnight for aging, and then filtered, washed with water 5 times and dried to obtain 437 g of co-precipitate. The composition of alloy elements in the co-precipirate was Nd_{12.4}Dy_{3.2}Fe_{75.2}B_{6.2}Cu_{3.0} and the content of alloy elements was 65.86%. The recovery rates of neodymium dyspiosium, rion, cooper and boron were 95.0%, 93.5% 93.6% 43.3% and 2.6%, respectively. The product was hydrogen-pre-reduced and dried by the same method as in Example 2 328 g of black powder were thus obtained with alloy element content being 87.9%. The product was ground sieved through 180-mesh screen, and then mixed with 160 g of calcium scraps. The mixture was then intimately packed in an iron reaction can, which was then sealed and placed in the constant temperature zone of a tubular furnace to allow the content to undergo a reduction-diffusion by the same steps as in Example 2. The cooled product was withdrawn from the reaction can, and then rinsed and dried by the same method as in Example 2. The alloy composition was Nd_{12.2}Dy_{3.3}Fe_{75.2}B_{6.0}Cu_{3.3}, purity 99.66% and calcium content 0.04%. The resulting alloy was milled until an average diameter of about 3 µm was reached and then oriented, compacted, sintered and aged under the same conditions as in Example 2. The cooled product was measured as maximum energy product (BH)ₘₐₓ=254.8 kJ/m³, remanence Br=0.001154T (11.54 kG), and coercive force iHc=813 3 kA/m.

### Example 9

250 g of machining surplus of composition Nd Nd_{15.4}Fe_{76.4}B_{8.2} were weighed and dissolved in 2500 ml of I I hydrochloric acid, into which 50 g of FeCl₂ . 4H₂O were added, then the mixture was slightly warmed for dissolution to become a clear solution and diluted to 5 L (feed solution), 500 g of boric acid were weighed and dissolved in 5 L of water, then 200 ml of concentrated ammonia water and 1000 g of ammonium carbonate were dissolved in it to give a clear solution (precipitant). The precipitant solution was transferred into a 20 L reactor and heated to 50-60 °C. Then the feed solution was gradually fed within about 30 min with constant stirring (1500-2000 rpm). The precipitate was formed and slowly turned to dark green colour with pH of the mother liquor being 7.5. The mixture was set aside overnight for aging, and then filtered washed with water 5 times and dried to obtain 389 g of co-precipitate. The composition of alloy elements in the co-precipitate was Nd_{15.2}Fe_{76.3}B_{8.5} and the content of alloy elements was 65.35%. The recovery lates of neodymium, iron and boron were 93.0%, 86.7% and 33%, respectively. The product was hydrogen-pre-reduced and dried by the same method as in Example 2.290 g of black powder were thus obtained with alloy element content being 88.0%. The product was ground, sieved through 180-mesh screen, and then mixed with 130 g of calcium scraps (about 50% in excess). The mixture was then intimately packed in an iron reaction can, which was then sealed and placed in the constant temperature zone of a tubular furnace to allow the content to undergo a reduction-diffusion by the same steps as in Example 2. The cooled product was withdrawn from the reaction can, and then rinsed and dried by the same method as in Example 2. The alloy composition was Nd_{15.2}Fe_{76.8}B_{8.0}. purity 99.42% and calcium content 0.04%. The resulting alloy was milled until an average diameter of about 3 µm was reached, and then oriented, compacted, sintered and aged under the same conditions as in Example 2. The cooled product was measured as maximum energy product (BH)ₘₐₓ=254.8 kJ/m³, remanence Br=0.00112T (11.20 kG), and coercive force iHc=810.4 kA/m.

## Claims

1. A process for the preparation of a Nd-Fe-B permanent magnetic alloy, which process comprises the steps of:
(a) mixing an aqueous solution of a neodymium salt, optionally containing a light rare earth or heavy rare earth metal, with an aqueous solution of a ferrous salt, optionally containing another transition metal, to yield a feed solution, which is then subjected to a co-precipitation with a precipitant of an aqueous solution of ammonium hydroxide and ammonium carbonate containing a soluble boron compound chosen from boric acid, borax and boron oxide, and optionally a soluble aluminium salt replaces part of the boron, to form a co-precipitate product;
(b) introducing hydrogen at a temperature of 600-1000°C into the co-precipitate product to remove part of the oxygen therefrom, with the hydrogen pre-reduction continuing until there is no moisture evolving in any tail gas and only oxygen is left over in the product apart from the alloy elements, so as to form a hydrogen pre-reduction product;
(c) completely mixing the hydrogen pre-reduction product with metallic calcium or calcium hydride, to cause a calcium reduction-diffusion, and
(d) rinsing and drying the reduction product, and manufacturing the alloy powder.

2. A process according to claim 1, wherein the co-precipitation step (a) is conducted at a temperature from 40-80°C with constant stirring at a pH of 7-10, the mixture is set aside for 12-48 hours after complete reaction and the precipitate is washed in water 3-6 times and dried;
the hydrogen reduction step (b) is conducted by grinding the co-precipitate product, sieving it through 80- to 180-mesh screens, heating to 600-1000°C in a rotary drying furnace, passing nitrogen first until there is no further ammonia to be released, followed by passing hydrogen, cooling the product, sieving it through 80-to 180-mesh screens and rinsing with water in a conical rinser until no white waxy fines overflow, and then drying;
the calcium reduction-diffusion step (c) is conducted by placing the hydrogen pre-reduction product in a rotary drying furnace to dry it at a temperature of 120°C and under a vacuum of 1-5 Pa, then cooling, grinding and sieving the product through 80- to 180-mesh screens, subsequently mixing with metallic calcium or calcium hydride, and placing the mixture in a sealed reaction vessel under an atmosphere of an inert or reducing gas or under a vacuum of 1-5 Pa, heating to a temperature of 1000-1250°C to bring about the reduction reaction for a period of 1-3 hours, and rapidly cooling the product to room temperature; and
the rinsing, drying and powder manufacturing step (d) is performed by soaking the reduction product with water and milling it to 10-50 µm, rinsing it with water under an inert gas in a conical rinser until the pH is 8, rinsing it with a chemical rinsing liquid under intensive agitation, rinsing with water again until the pH is 8, then soaking with ethanol, acetone and ether successively for 10-30 minutes each, followed by drying the product at 120°C under a vacuum of 1-5 Pa for 1 hour, then milling until an average diameter of 3 µm is reached.

3. A process according to claim 1 or 2, wherein the weight ratio of the fed alloy element compounds in step (a) calculated as alloy elements is Nd:Fe:B of 1:1.0-2.5: 10-100, the amount of the precipitant is 1.5-5 times the stoichiometric quantity; the mole ratio of ammonium hydroxide to ammonium carbonate is 1:1.5-7, and preferably 1:3-5; and the molar amount of calcium or calcium hydride is 1.4-4.0 times the stoichiometric quantity.

4. A process according to any one of the preceding claims, wherein the neodymium salt used in step (a) is neodymium chloride, neodymium nitrate, neodymium sulfate or neodymium oxide soluble in hydrochloric acid; the ferrous salt is ferrous chloride or ferrous sulfate; and the boron compound is boric acid, borax or boron oxide.

5. A process according to any one of the preceding claims, wherein the co-precipitation reaction in step (a) takes place at a temperature of 50-60°C.

6. A process according to any one of the preceding claims, wherein the feed solution and the precipitant in step (a) react in a sequentially-adding, anti-sequentially-adding or simultaneously-adding fashion.

7. A process according to any one of the preceding claims, wherein the chemical rinsing liquid in step (d) is 0.5-3 wt% EDTA or 0.5-1 vol% acetylacetone aqueous solution with a pH of 8-10.

8. A process according to any one of the preceding claims, wherein the feed solution in step (a) is prepared by dissolving wastes or machining surplus of Nd-Fe-B permanent magnetic alloys in hydrochloric acid.

9. A process according to claim 1, wherein a light rare earth or a heavy rare earth metal replaces part of the neodymium, aluminium replaces part of the boron, and a transition metal replaces part of the iron, and
wherein the light rare earth metal is provided in the form of a salt of lanthanum, cerium, praseodymium or a mixture thereof,
wherein the heavy earth metal is provided in the form of a salt of terbium, dysprosium, holmium or a mixture thereof, and
wherein the transition metal is provided in the form of a water-soluble salt of cobalt, nickel, copper, niobium or a mixture thereof.

## Patentansprüche

1. Verfahren zur Herstellung einer Nd-Fe-B-Permanentmagnetlegierung mit folgenden Schritten:
(a) Mischen einer wäßrigen Lösung eines Neodymsalzes, das optional ein leichtes oder schweres Seltenerdmetall enthält, mit einer wäßrigen Lösung eines Eisen(II)-Salzes, das optional ein anderes Übergangsmetall enthält, um eine Ausgangslösung zu erhalten, die dann einer Mitfällung mit einem Fällungsmittel aus einer wäßrigen Lösung von Amoniumhydroxid und Amoniumcarbonat, die eine lösbare Borkomponente, die aus Borsäue, Borax oder Bortrioxid ausgewählt ist, und optional ein lösbares Aluminiumsalz enthält, ausgesetzt wird, um ein Mitfällprodukt zu erzeugen;
(b) Einführen von Wasserstoff mit einer Temperatur von 600 bis 1000°C in das Mitfällprodukt, um einen Teil des Sauerstoffs daraus zu entfernen, wobei die Wasserstoffmitfällung fortgesetzt wird, bis sich keine Feuchtigkeit in den Endgasen entwickelt und bis auf die Legierungselemente nur Sauerstoff in dem Produkt übrig bleibt, so daß ein Wasserstoff-Vorreduktionsprodukt entsteht;
(c) vollständiges Mischen des Wasserstoff-Vorreduktionsprodukts mit metallischem Kalzium oder Kalziumhydrid, um eine Kalziumreduktionsdiffusion zu erzeugen, und
(d) Spülen und Trocknen des Reduktionsproduktes und Herstellen des Legierungspulvers.

2. Verfahren nach Anspruch 1, wobei der Mitfällungsschritt (a) bei einer Temperatur zwischen 40 bis 80°C mit konstantem Rühren bei einem pH von 7 bis 10 durchgeführt, die Mischung nach beendeter Reaktion für 12 bis 48 Stunden stehengelassen und die Ausfällung 3 bis 6 Mal in Wasser gewaschen wird und getrocknet wird;
der Wasserstoffreduktionsschritt (b) durch Mahlen des Mitfällprodukts, Sieben desselben durch 80 bis 180er Maschensiebe, Erhitzen auf 600 bis 1000°C in einem Trommelofen, Durchleiten zuerst von Stickstoff, bis kein weiterer Ammoniak mehr freigesetzt wird, gefolgt von einem Durchleiten von Wasserstoff, Kühlen des Produkts, Sieben des Produkts durch 80 bis 180er Maschensiebe und Spülen mit Wasser einer kegeligen Spülvorrichtung, bis keine weißen, wachsähnlichen Abriebe mehr überlaufen, und anschließendes Trocknen durchgeführt wird;
der Kalziumreduktions-Diffusionsschritt (c) durch Stellen des Wasserstoff-Vorreduktionsprodukts in einen Trommelofen, um es bei einer Temperatur von 120°C und bei einem Vakuum von 1 bis 5 Pa zu trocknen, anschließendes Kühlen, Mahlen und Sieben des Produkts durch 80 bis 180er Maschensiebe, nachfolgendes Mischen mit metallischem Kalzium oder Kalziumhydrid und Einführen der Mischung in ein versiegeltes Reaktionsgefäß in einer Atmosphäre eines inerten oder reduzierenden Gases oder mit einem Vakuum von 1 bis 5 Pa, Erhitzen auf eine Temperatur zwischen 1000 bis 1250°C, um die Reduktionsreaktion für eine Zeitdauer von 1 bis 3 Stunden zu erzeugen, und schnelles Abkühlen des Produkts auf Zimmertemperatur durchgeführt wird, und
der Spül-, Trocken- und Pulverherstellungsschritt (d) durch Wässern des Reduktionsprodukts mit Wasser und Mahlen desselben bis auf 10 bis 50 µm, Spülen mit Wasser unter einem inerten Gas in einer kegeligen Spülvorrichtung, bis der pH 8 beträgt, Spülen mit einer chemischen Spülflüssigkeit unter intensiver Bewegung, erneutes Spülen mit Wasser, bis der pH 8 beträgt, aufeinanderfolgendes Wässern für jeweils 10 bis 30 Minuten mit Ethanol, Azeton und Äther, gefolgt vom Trocknen des Produkts bei 120°C in einem Vakuum von 1 bis 5 Pa für eine Stunde und anschließendes Mahlen, bis ein durchschnittlicher Durchmesser von 3 µm erreicht ist, durchgeführt wird.

3. Verfahren nach Anspruch1 oder 2, wobei das Gewichtsverhältnis der in Schritt (a) zugeführten Legierungselementkomponenten, berechnet als Legierungselemente, Nd : Fe : B mit 1 : 1.0 - 2.5 : 10 - 100 beträgt, wobei die Menge des Fällmittels das 1,5 bis 5fache der stöchiometrischen Quantität beträgt, das Molverhältnis von Ammoniumhydroxid zu Ammoniumcarbonat 1 : 1,5 - 7 und vorzugsweise 1 : 3 - 5 beträgt und die molare Menge von Kalzium oder Kalziumhydrid das 1,4 bis 4fache der stöchiometrischen Quantität beträgt.

4. Verfahren nach einem der vorhergehenden Ansprüche, bei dem das in Schritt (a) verwendete Neodymsalz Neodymchlorid, Neodymnitrat, Neodymsulfat oder Neodymoxid, lösbar in Salzsäure, das Eisen(II)-Salz Eisendichlorid oder Eisen(II)Sulfat und die Boronkomponente Borsäure, Borax oder Bortrioxid ist.

5. Verfahren nach einem der vorhergehenden Ansprüche, bei dem die Mitfällreaktion in Schritt (a) bei einer Temperatur von 50-60°C stattfindet.

6. Verfahren nach einem der vorhergehenden Ansprüche, bei dem die Ausgangslösung und das Fällmittel in Schritt (a) nach Art einer sequentiellen Zugabe, einer antisequentiellen Zugabe oder einer gleichzeitigen Zugabe reagieren.

7. Verfahren nach einem der vorhergehenden Ansprüche, bei dem die chemische Spülflüssigkeit in Schritt (d) 0,5 bis 3 Gew. % EDTA oder 0,5 bis 1 Vol. % Acetylaceton in wäßriger Lösung mit einem pH von 8 bis 10 ist.

8. Verfahren nach einem der vorhergehenden Ansprüche, bei dem die Ausgangslösung in Schritt (a) durch Auflösen von Abfällen oder durch Bearbeiten von überschüssigen Nd-Fe-B Permanentmagnetlegierungen in Salzsäure zubereitet wird.

9. Verfahren nach Anspruch 1, bei dem eine leichte oder schwere Seltene Erde einen Teil des Neodyms ersetzt, Aluminium einen Teil des Borons ersetzt und ein Übergangsmetall einen Teil des Eisens ersetzt.

## Revendications

1. Procédé pour la préparation d'un alliage magnétique permanent, lequel procédé comprend les étapes consistant à :
(a) mélanger une solution aqueuse d'un sel de néodymium, contenant en option un métal léger ou lourd du groupe des terres rares, avec une solution aqueuse d'un sel ferreux, contenant en option un autre métal de transition, pour produire une solution d'alimentation, qui est ensuite soumise à une co-précipitation avec un précipitant d'une solution aqueuse d'hydroxyde d'ammonium et de carbonate d'ammonium contenant un composé soluble du bore choisi parmi l'acide borique, le borax et l'oxyde de bore, et en option un sel d'aluminium soluble, pour former un co-précipitat ;
(b) introduire de l'hydrogène à une température comprise entre 600 et 1000°C dans le co-précipitat pour en retirer une partie de l'oxygène, la réduction préalable de l'hydrogène se poursuivant jusqu'à ce qu'il n'y ait plus d'humidité dans les gaz de queue et qu'il reste seulement de l'oxygène dans le produit mis à part les éléments de l'alliage, de manière à former un produit de pré-réduction de l'hydrogène ;
(c) mélanger totalement le produit de la pré-réduction de l'hydrogène avec du calcium métallique ou de l'hydrure de calcium, pour réaliser une diffusion et une réduction du calcium, et
(d) rincer et sécher le produit de la réduction, et fabriquer la poudre d'alliage.

2. Procédé selon la revendication 1, dans lequel l'étape (a) de co-précipitation est réalisée à une température comprise entre 40 et 80°C tout en agitant constamment à un pH compris entre 7 et 10, le mélange est mis de côté pendant 12 à 48 heures après que la réaction s'est achevée et le précipitât est lavé 3 à 6 fois dans de l'eau et est séché ;
l'étape (b) de réduction de l'hydrogène est réalisée en broyant le co-précipitat, en le tamisant au moyen de cribles de 80 à 180 mailles, en chauffant à une température comprise entre 600 et 1000°C dans un four de séchage rotatif, en faisant tout d'abord passer de l'azote jusqu'il n'y ait plus de dégagement de gaz ammoniac, puis en faisant passer de l'hydrogène, en refroidissant le produit, en tamisant au moyen de cribles de 80 à 180 mailles et en rinçant avec l'eau dans un appareil de rinçage conique jusqu'à ce qu'il n'y ait plus de particules de cire blanche, puis en séchant.
l'étape (c) de diffusion et de réduction du calcium est réalisée en plaçant le produit de pré-réduction de l'hydrogène dans un four de séchage rotatif pour le sécher à une température de 120°C et à un vide secondaire (entre 1 et 5 Pa), puis en refroidissant, broyant et tamisant le produit au moyen de cribles de 80 à 180 mailles, puis en mélangeant avec du calcium métallique ou dc l'hydrure de calcium, et en plaçant le mélange dans un récipient de réaction scellé sous atmosphère de gaz inerte ou réducteur ou à un vide secondaire (entre 1 et 5 Pa), en chauffant à une température comprise entre 1000 et 1250°C pour provoquer la réaction de réduction pendant un intervalle de temps de 1 à 3 heures, et en refroidissant rapidement le produit à la température ambiante ; et
l'étape (d) de rinçage, de séchage et de fabrication de la poudre est réalisée en trempant le produit de la réduction avec de l'eau et en le moulant à un diamètre compris entre 10 et 50 µm, en le rinçant avec de l'eau sous atmosphère de gaz inerte dans un appareil de rinçage conique jusqu'à ce que le pH soit de 8, en le rinçant avec un liquide de rinçage chimique tout en agitant énergiquement, en rinçant de nouveau jusqu'à ce que le pH soit de 8, puis en trempant avec de l'éthanol, de l'acétone et de l'éther successivement pendant 10 à 30 minutes à chaque fois, puis en séchant le produit à 120°C à un vide secondaire (1 à 5 Pa) pendant 1 heure, puis en moulant jusqu'à obtenir un diamètre moyen de 3 µm.

3. Processus selon la revendication 1 ou 2, dans lequel le rapport en poids des composés de l'alliage fournis à l'étape (a) et calculés comme éléments de l'alliage Nd:Fe:B est de 1 :1,0-2,5:10-100, la quantité de précipitant est de 1,5 à 5 fois la quantité stoechiométrique ; le rapport molaire de l'hydroxyde d'ammonium sur le carbonate d'ammonium est de 1:1,5-7, et de préférence 1:3-5 ; et la quantité molaire de calcium ou d'hydrure de calcium est de 1,4 à 4,0 fois la quantité stoechiométrique.

4. Procédé selon l'une quelconque des revendications précédentes, dans lequel le sel de néodymium utilisé dans l'étape (a) est le chlorure de néodymium, le nitrate de néodymium, le sulfate de néodymium ou l'oxyde de néodymium soluble dans de l'acide chlorhydrique, le sel ferreux est le chlorure. ferreux ou le sulfate ferreux, et le composé du bore est l'acide borique, le borax ou l'oxyde de bore.

5. Procédé selon l'une quelconque des revendications précédentes, dans lequel la réaction de co-precipitation à l'étape (a) est effectuée à une température comprise entre 50 et 60°C.

6. Procédé selon l'une des revendications précédentes, dans lequel la solution d'alimentation et le précipitant à l'étape (a) réagissent dans un mode d'addition séquentielle, d'addition anti-séquentielle ou d'addition simultanée.

7. Procédé selon l'une quelconque des revendications précédentes, dans lequel le liquide de rinçage chimique à l'étape (d) est 0,5 à 3% en poids de EDTA ou 0,5 à 1% en volume de solution aqueuse d'acétylacétone à un pH compris entre 8 et 10.

8. Procédé selon l'une quelconque des revendications précédentes, dans lequel la solution d'alimentation à l'étape (a) est préparée par dissolution de déchets ou par attaque des alliages magnétiques permanents Nd-Fe-B en excès par de l'acide chlorhydrique.

9. Procédé selon la revendication 1, dans lequel une terre rare légère ou une terre rare lourde remplace le néodymium, l'aluminium remplace une partie du bore, et un métal de transition remplace une partie du fer.
